# EUROPEAN PATENT SPECIFICATION

(11) **EP 1 577 049 B1**
(45) Date of publication and mention of the grant of the patent: **27.10.2010**
(21) Application number: 03730236.1
(22) Date of filing: 18.06.2003
(51) Int. Cl.: B23K 26/20

(54) **METHOD OF WELDING HARDENING CARBON STEELS USING A HIGH-POWER DIODE LASER**
VERFAHREN ZUM SCHWEISSEN VON HÄRTENDEN KOHLENSTOFFSTÄHLEN UNTER VERWENDUNG EINES HOCHLEISTUNGSDIODENLASERS
PROCEDE DE SOUDAGE D'ACIERS AU CARBONE DURCISSABLES PAR LASER A DIODE DE GRANDE PUISSANCE

(30) Priority: 27.06.2002 ES 200201481
(43) Date of publication of application: 21.09.2005
(73) Proprietor: Universidad de Vigo, E-36310 Vigo (ES)
(72) Inventor: SANCHEZ CASTILLO, A.; c/o Dep. de Fisica Aplicada, 36280 Vigo (PONTEVEDRA) (ES); POU SARACHO, J. M.; c/o Dep. de Fisica Aplicada, 36280 Vigo (PONTEVEDRA) (ES); SOTO COSTAS, R. F.; c/o Dep. de Fisica Aplicada, 36280 Vigo (PONTEVEDRA) (ES); LUSQUINOS RODRIGUEZ, F.;c/o Dep. Fisica Aplicada, 36280 Vigo (PONTEVEDRA) (ES); BOUTINGUIZA SIDAHMED-LAROSI, Mohamed, Lagoas-Marcosende 9,36280 Vigo (ES); QUINTERO MARTINEZ, F.; c/o Dep. de Fisica Aplicada, 36280 Vigo (ES); PEREZ-MARTINEZ Y PEREZ-AMOR, Mariano Jesus, Lagoas-Marcosende 9,36280 VIGO (ES)
(74) Representative: Arias Sanz, Juan
(86) International application number: PCT/ES2003/000301
(87) International publication number: WO 2004/002669

(56) References cited:
- EP-A- 1 053 822
- WO-A-02/16071
- FR-A- 2 815 278

## Description

### OBJECT OF THE INVENTION

The invention refers to a method of welding hardening carbon steel metal members by means of applying laser radiation from a high-power diode.

With the application of the method object of the present invention, it is possible to form autogenous welds without using pre-heating or post-welding treatments, processes generally used in the welding of hardening carbon steels when conventional fusion welding methods are used. The welds obtained by the application of this method are reliable, they are free of internal or external fissures, pores, or any other defect typical of fusion welding carried out with conventional methods, such as undercuts, slag inclusion, weld spatters, etc.

On the other hand, the welds obtained by means of applying the method object of the invention have a cosmetic surface finish which is characterized by its very low roughness, whereupon the need for work subsequent to welding is prevented.

### BACKGROUND OF THE INVENTION

Carbon steels represent the most important group of metal materials for engineering. The most significant feature of steel is its versatility, given that its properties can be controlled and modified for the purpose of meeting service requirements. In these steels, the main factors affecting their mechanical properties are carbon content and microstructure. Basically, the tensile strength, creep resistance, and hardness are increased by increasing the carbon content; on the contrary, the elongation, area reduction, and toughness decrease notably with said increase. Another attribute of steel, which is probably of greater importance, it is capacity to harden, a quality commonly referred to as hardenability. This characteristic is also affected with the carbon content increase.

Within this type of steels, there are those referred to as hardenable by tempering, for which types the carbon content must be at least 0.25%. Steels with a carbon content around 0.4-0.5% are used extensively for building structures and various machinery parts, such as bolts, screws, shafts, gears, etc., due to their high mechanical strength, their wear resistance, their high hardness and their favorable economic conditions, such as their low cost and supply assurance.

Conventional fusion welding processes have traditionally been used for joining this type of steels; these types of welding have several types of drawbacks characteristic of the process:
- Large amount of heat generated by the arc.
- Need to use fluxes.
- Use of electrodes of reactive materials.
- Incompatibility (occasionally) of the mechanical properties of the filler metal and the base metal.

These drawbacks lead to the occurrence of different types of defects, such as:
- High distortions of the welded members.
- Slag inclusion in the welded joint.
- Excessive weld spatters during the process.
- Excessive porosity.

And all the foregoing entails poor mechanical properties of the welded joint. In an attempt to prevent these drawbacks, a series of practices have been adopted, such as pre-welding heat treatments of the parts, post-welding heat treatments, prior machining of the surfaces to be welded, use of special filler materials in the weld, etc. All these treatments manage to palliate the previously described drawbacks, but they increase the technical complexity and the cost of the welding operations quite considerably. For example, heat treatments prior to welding require the design of specific tools for each application, either the design of windings (in the case of heating by electric induction) or of welding torches (if heating by flame is involved). On the other hand, in other cases the design and prior preparation of the joint is necessary, the machining of the faces to be welded being necessary. This machining is not always a simple task, mainly when the geometry of the joint is complicated.

Based on the foregoing, the need to search for new welding methods for this type of steels is evident. Laser welding has revolutionized fusion welded joint technology and is currently dominated by the CO₂ and Nd:YAG laser welding systems, which stand out due to their ability to generate high optical power levels, their efficiency, however, is very low because they are indirectly actuated by the power source used, such as electric discharge or flash lamps. Despite the enormous market share of the welding covered by these types of lasers, industrial applications of these laser equipments in welding hardening steels are limited to those with a carbon content of no more than 0.25%. One of the techniques used in conventional welding processes intended to improve the weldability of steels with high carbon content is the application of a given amount of heat before carrying out the welding. Adapting this technique to laser welding has been attempted, but from a practical point of view, its coupling is complicated, while at the same time preheating implies the risk of distortion.

The development of a new generation of lasers based on a diode array provides engineers and technicians with equipment which can provide very high power levels (1.5 to 6 kW) with an electric conversion efficiency (over 40%) far exceeding that of the lasers currently used (<10%). Although these lasers are still in the phase of development and improvement of their operating features, that very remarkable efficiency, together with their strength, their reduced size, their portability, their operating ease, their stability, the fact that they are susceptible to transmitting energy by means of optical fiber, makes them very interesting for their application in manufacturing processes such as that of welding of metal members, such as hardening carbon steels.

Patent application WO 02/16071 discloses a method of welding metal and metal alloys by using a hybrid technique that combines an electric arc with a power-diode laser.

### DESCRIPTION OF THE INVENTION

The proposed method has been conceived to solve the aforementioned drawbacks, being based on a simple solution, however no less effective as a result, given that it involves the application of a high-power diode laser for the welding of hardening steels.

The method object of the present invention basically entails the following:
- Preparation of the walls of the parts to be joined. This is a mere cleaning which may entail (depending on the needs) all or some of the following tasks:
   - Elimination of burrs.
   - Degreasing by means of a suitable organic solvent (acetone, isopropanol, ethanol, etc...).
- Arrangement of the hardening carbon steel parts which are to be welded on a support suited to their dimensions, such that the walls to be joined thereof are in contact or else at a short distance from one another. Suitable fixing of the parts.
- Irradiation in the contact area between the two parts by means of a laser beam from a high-power diode laser and led directly to the working area by means of mirrors or optical fiber. It may be necessary to use some type of lens for the purpose of achieving a suitable guiding of the beam in its path from the laser source to the working area.
- Fusion of the interaction areas of the hardening carbon steel parts with the laser beam.
- Relative movement between the laser beam and the parts to be welded such that the laser beam irradiates the entire surface intended to be welded.

For the purpose of providing suitable protection to the irradiated area, it is convenient to supply an inert gas (Ar, He, Ne) at the same time as carrying out the welding. Likewise, the incidence of the beam may be perpendicular to the surface of the steel parts or form a certain angle with them. By varying this angle of incidence according to the profile of the joint, uniform welds can be obtained in parts with a complicated and even three-dimensional geometry.

On the other hand, the mechanical properties of the welded joint can be modified by means of applying ultrasonic vibration simultaneous to the action of the laser to the steel parts to be welded. Said modification of the mechanical properties can also be obtained by means of a suitable pulsation of the diode laser beam.

Among the advantages derived from the method of the invention, the following can be mentioned:
- It is possible carry out welds with no need whatsoever for filler material (autogenous welding).
- Heat treatment prior to welding is not needed.
- Heat treatment after welding is not needed.
- The need for specific tools for carrying out said heat treatments, either the design of windings (in the case of heating by electric induction) or welding torches (if heating by flame is involved), is eliminated.
- The welds obtained are totally free of cracks and any other type of defects.
- Filling of small spaces between the parts to be welded (which is practically impossible by other methods based on the CO₂ or the Nd:YAG laser) is possible.
- The thermally affected area is very small.
- Distortion of the welded parts is minimum.
- The need for any type of work subsequent to welding is eliminated.

### PREFERRED PRACTICAL EMBODIMENT OF THE INVENTION

The welding in abutting geometrical configuration of AISI 1045 hardening carbon steel (having a carbon content of 0.47%) plates was carried out experimentally by means of a high power diode laser (λ = 940 nm) operating in continuous mode, with a 100 mm-focal length optical system focused on the upper portion of the contact surface of both plates, in a perpendicular incidence with addition of Ar as the auxiliary gas. Said parts were welded under these conditions at a rate of 2 x 10⁻³ m/s. By means of visual analysis, it is observed that the welds have a cosmetic-type surface finish, are free of surface-related spatters, undercuts, excessive slag, and cracks. Analysis under electronic microscope showed that the weld has no cracks or microfissures, neither in the fused area nor in the thermally-affected area. Microstructure analysis shows that the fusion area is formed by a mixture of ferrite and perlite and the thermally affected area is free of martensite (extremely hard and brittle phase). All this provides said weld with excellent features.

## Claims

1. A method of welding hardening carbon steels using a laser, wherein the following operations are established therein:
- Preparation of the walls of the parts to be joined based on a cleaning which may entail all or some of the following tasks:
a)Elimination of burrs.
b)Degreasing by means of a suitable organic solvent such as acetone, isopropanol, ethanol or the like.
- Arrangement of the hardening carbon steel parts to be welded on a support suited to their dimensions, such that the walls to be joined thereof are in contact or else at a short distance from one another, immediately proceeding to the suitable fixing of said parts.
- Irradiation in the contact area between the two parts by means of a laser beam from a laser and led directly to the working area by means of mirrors or optical fiber, some type of lens being able to participate in the leading or guiding of the beam from the laser source to the working area.
- Fusion of the integration areas of the hardening carbon steel parts with the laser beam.
- Relative movement between the laser beam and the parts to be welded such that the laser beam irradiates the entire contact area intended to be welded,
**characterized in that** the laser is a high-power diode laser.

2. A method of welding hardening carbon steels using a high-power diode laser according to claim 1, **characterized in that** any type of inert gas with protection or gas auxiliary to the laser treatment is used.

3. A method of welding hardening carbon steels using a high-power diode laser according to claims 1 and 2, **characterized in that** the mobile system connected to any equipment controlling the position of the parts consists in a robot of any kind in a coordinates table of any kind or in a combination of both systems.

4. A method of welding hardening carbon steels using a high-power diode laser according to claims 1 to 3, **characterized in that** the laser beam comes from a diode laser of any beam wavelength, power, frequency or quality.

## Patentansprüche

1. Verfahren zum Schweißen von härtenden Kohlenstoffstählen unter Verwendung eines Lasers, bei dem die folgenden Vorgänge darin festgelegt sind:
- Vorbereitung der Wandungen der zusammenzufügenden Teile beruhend auf einer Reinigung, die alle oder einige der folgenden Aufgaben umfassen kann:
a) Beseitigung von Graten.
b) Entfetten mittels eines geeigneten organischen Lösungsmittels wie etwa Aceton, Isopropanol, Äthanol oder dergleichen.
- Anordnung der zu schweißenden härtenden Kohlenstoffstahlteile auf einem für deren Abmessungen geeigneten Auflager derart, dass deren zusammenzufügende Wandungen in Kontakt sind oder aber in einem geringen Abstand voneinander liegen, und unmittelbar die geeignete Befestigung der Teile vorgenommen wird.
- Bestrahlung in dem Kontaktbereich zwischen den beiden Teilen mittels eines Laserstrahls aus einem Laser, der über Spiegel oder Lichtleitfaser direkt zum Arbeitsbereich geleitet wird, wobei eine Art Linse an der Leitung bzw. Führung des Strahls von der Laserquelle zum Arbeitsbereich beteiligt sein kann.
- Verschmelzung der Integrationsbereiche der härtenden Kohlenstoffstahlteile mit dem Laserstrahl.
- Relativbewegung zwischen dem Laserstrahl und den zu schweißenden Teilen derart, dass der Laserstrahl den gesamten Kontaktbereich, der geschweißt werden soll, bestrahlt,
**dadurch gekennzeichnet, dass** der Laser ein Hochleistungsdiodenlaser ist.

2. Verfahren zum Schweißen von härtenden Kohlenstoffstählen unter Verwendung eines Hochleistungsdiodenlasers nach Anspruch 1 , **dadurch gekennzeichnet, dass** jede Art schützendes Edelgas oder zusätzlich zur Laserbehandlung Gas verwendet wird.

3. Verfahren zum Schweißen von härtenden Kohlenstoffstählen unter Verwendung eines Hochleistungsdiodenlasers nach den Ansprüchen 1 und 2, **dadurch gekennzeichnet, dass** das mobile System, das mit einem die Position der Teile steuernden Gerät verbunden ist, aus einem Roboter jeder Art, aus einem Koordinatentisch jeder Art oder aus einer Kombination aus beiden Systemen besteht.

4. Verfahren zum Schweißen von härtenden Kohlenstoffstählen unter Verwendung eines Hochleistungsdiodenlasers nach den Ansprüchen 1 bis 3, **dadurch gekennzeichnet, dass** der Laserstrahl von einem Diodenlaser jeder Strahlwellenlänge, Leistung, Frequenz oder Güte stammt.

## Revendications

1. Procédé de soudage au laser d'aciers trempés au carbone, dans lequel sont exécutées les opérations suivantes :
- préparation des parois des pièces à assembler, sur la base d'un nettoyage qui peut comprendre tout ou partie des tâches suivantes :
a) élimination des bavures ;
b) dégraissage à l'aide d'un solvant organique adéquat tel que l'acétone, l'isopropanol, l'éthanol ou similaire ;
- agencement des pièces en acier trempé au carbone à souder sur un support convenant pour leurs dimensions, afin que leurs parois à souder soient en contact ou au moins à une faible distance l'une de l'autre, puis immédiatement fixation adéquate desdites pièces ;
- éclairement de la zone de contact entre les deux pièces à l'aide d'un faisceau laser, provenant d'un laser et envoyé directement dans la zone de travail à l'aide de miroirs ou d'une fibre optique, certains types de lentilles pouvant intervenir dans la conduction ou le guidage du faisceau entre la source laser et la zone de travail ;
- fusion des zones d'intégration des pièces en acier trempé au carbone à l'aide du faisceau laser ;
- mouvement relatif entre le faisceau laser et les pièces à souder, afin que le faisceau laser éclaire la totalité de la zone de contact devant être soudée ;
**caractérisé en ce que** le laser est un laser à diode de forte puissance.

2. Procédé de soudage d'aciers trempés au carbone à l'aide d'un laser à diode de forte puissance selon la revendication 1, **caractérisé en ce que** l'on utilise tout type de gaz inerte pour la protection ou de gaz servant d'auxiliaire au traitement par laser.

3. Procédé de soudage d'aciers trempés au carbone à l'aide d'un laser à diode de forte puissance selon les revendications 1 et 2, **caractérisé en ce que** le système mobile connecté à un équipement quelconque commandant la position des pièces est constitué d'un robot d'un type quelconque, d'une table à coordonnées de type quelconque ou d'une combinaison des deux systèmes.

4. Procédé de soudage d'aciers trempés au carbone à l'aide d'un laser à diode de forte puissance selon les revendications 1 à 3, **caractérisé en ce que** le faisceau laser provient d'une diode laser de longueur d'onde, de puissance, de fréquence ou de qualité quelconque.
